# NEUE EUROPÄISCHE PATENTSCHRIFT

(11) **EP 2 464 532 B2**
(45) Veröffentlichungstag und Bekanntmachung des Hinweises auf die Entscheidung über den Einspruch: **07.08.2019**
(45) Hinweis auf die Patenterteilung: 29.06.2016
(21) Anmeldenummer: 10739917.2
(22) Anmeldetag: 02.08.2010
(51) Int. Cl.: B60J 10/00

(54) **ABDICHTUNGS-ANORDNUNG FÜR FESTE FAHRZEUGSCHEIBEN UND DEREN VERWENDUNG**
SEALING ARRANGEMENT FOR FIXED VEHICLE WINDOWS AND ITS USE
JOINT D'ÉTANCHÉITÉ POUR VITRE DE VÉHICULE FIXE ET UTILISATION D'UN TEL JOINT D'ÉTANCHÉITÉ

(30) Priorität: 13.08.2009 DE 102009026369
(43) Veröffentlichungstag der Anmeldung: 20.06.2012
(73) Patentinhaber: Saint-Gobain Glass France, 92400 Courbevoie (FR)
(72) Erfinder: TIMMERMANN, Alwin, 50933 Köln (DE)
(74) Vertreter: Gebauer, Dieter Edmund
(86) Internationale Anmeldenummer: PCT/EP2010/061208
(87) Internationale Veröffentlichungsnummer: WO 2011/018379

(56) Entgegenhaltungen:
- EP-A1- 1 808 322
- EP-B1- 1 280 675
- DE-A1- 4 309 088
- DE-A1- 4 404 348
- DE-A1- 19 939 191
- DE-U1-202008 009 712
- US-A- 5 352 010
- US-A- 6 070 363

## Beschreibung

Die Erfindung betrifft eine Abdichtungs-Anordnung für Fahrzeugscheiben sowie deren Verwendung gemäß den Oberbegriffen der unabhängigen Patentansprüche.

Aus der gattungsgemäßen EP 1 280 675 B1 ist eine Abdichtungs-Anordnung für Fahrzeugscheiben für den unteren Bereich einer Kraftfahrzeug-Windschutzscheibe bekannt, die über eine Halteschiene mit einer Wasserkasten-Abdeckung abdichtend verrastet ist und dass die Halteschiene eine Dichtung aufweist, die zwischen der Scheiben-Unterkante und dem oberen Rand der Wasserkasten-Abdeckung angeordnet ist und mit deren Außenflächen im wesentlichen bündig abschließt. Diese Anordnung besitzt allerdings den Nachteil, dass zum funktionsgemäßen Einrasten und zur funktionsgemäßen Abdichtung sehr geringe Fertigungstoleranzen erlaubt sind.

DE 20 2008 009 712 U1 offenbart eine Schutzeinrichtung für eine Fahrzeugscheibe, die randseitig mit einer Abdichtungsanordnung versehen ist, wobei die Schutzeinrichtung derart ausgebildet ist, dass sie im bestimmungsgemäß angeordneten Zustand die Abdichtungsanordnung während des Transportes oder der Lagerung der Fahrzeugscheibe entlastet.

EP 1 808 322 A1 offenbart ein Abdichtungselement, das ein Windlaufgitter eines Fahrzeugs mit einer Fahrzeugscheibe verbindet und bei dem die Positionierung während der Montage erleichtert ist.

Aufgabe der vorliegenden Erfindung ist es, unter Überwindung der Nachteile des Standes der Technik mit möglichst einfachen und wirtschaftlichen Mitteln eine verbesserte Abdichtungs-Anordnung für Fahrzeugscheiben bereitzustellen, wobei zum funktionsgemäßen Einrasten und zur funktionsgemäßem Abdichtung größere Fertigungstoleranzen ermöglicht werden.

Die Aufgaben der Erfindung werden durch die Merkmale des unabhängigen Patentanspruchs 1 gelöst. Vorteilhafte Ausgestaltungen der Erfindung sind durch die Merkmale der Unteransprüche gegeben.

Erfindungsgemäß beträgt der Abstand D zwischen der Kante der Scheibe im unteren Bereich und der Hinterkante der Abdeckung 0,1 mm bis 2 mm. Der Abstand wirkt dabei in der Fahrzeughülle als optisch nicht oder kaum sichtbare Fuge oder aber als gewollte Fuge, die zu Form-Zwecken sichtbar ist.

Bevorzugt ist auch eine runde, keilförmige oder rechtwinkelige Ausgestaltung der Hinterkante der Abdeckung möglich. Diese Ausgestaltungen erlauben insbesondere, die Notwendigkeit einer kaum sichtbaren Fuge mit einer ausreichenden Fertigungstoleranz bei der Montage der Abdichtungs-Anordnung zu kombinieren.

In einer bevorzugten Ausgestaltung der Erfindung ist das Federelement fest mit dem Stützkörper der Halteschiene verbunden. Besonders bevorzugt ist es auf den Stützkörper aufgeklebt, anextrudiert und / oder als vorgefertigtes Dichtprofil in eine entsprechende Nut eingebracht.

Das Federelement kann bevorzugt aus Vollmaterial oder als Hohlkammerprofil ausgeführt sein. Das Federelement kann jegliche Formen aufweisen, die eine erfindungsgemäße abdichtende und federnde Wirkung in der Abdichtungs-Anordnung erzielen. Das Federelement kann bevorzugt im Profilquerschnitt rund, oval, rechteckig oder U-förmig sein. Aufgrund der elastischen Deformation des Federelementes wird der zur Federwirkung und Abdichtung nötige Druck zwischen der Anlagefläche der Abdeckung und dem Stützkörper der Haltschiene ausgeübt. Zur Auslegung der Federcharakteristik sind insbesondere das Material, die Form, die Wandstärke bei Hohlkammerprofilen sowie das Volumen des Federelementes aufeinander abgestimmt.

In einer vorteilhaften Ausgestaltung der Erfindung ist die Halteschiene über eine Klebeverbindung mit der Scheibe verbunden. Die Klebeverbindung wird bevorzugt als Klebefilm oder Klebe-Raupe auf der Halteschiene aufgebracht. Übliche Dicken der Klebefilme sind 0,3 mm bis 2 mm.

In einer bevorzugten Ausgestaltung enthält das Federelement Elastomere, thermoplastische Elastomere und bevorzugt Ethylen-Propylen-Dien-Kautschuk, Styrol-Butadien-Kautschuk, Polybutadien-Kautschuk, Nitrilkautschuk, Chloropren-Kautschuk, Fluorkautschuk, Silikonkautschuk, Polypropylen, Polyvinylchlorid, Acrylnitril-Butadien-Styrol, Copolymere und / oder Gemische davon. Die Elastomere sind für das Federelement bevorzugt geeignet. Die Abdichtungs-Anordnung dichtet die Fahrzeughülle vornehmlich gegen Feuchtigkeit wie Wasserdampf, Regen und Schnee sowie jegliche Arten von Verunreinigungen aus der Umgebung ab. In der Wirkung kann die Anordnung aber auch auf die Form, die Reduzierung von Windgeräuschen sowie die Vibrationsausbreitung der Fahrzeughülle Einfluss haben.

Die Positionierung des Anschlags im Rastkanal wird durch die Form von Rastkanal und Rastschiene sowie deren Anordnung mit der Scheibe bestimmt. Die Rastschiene kann mindestens teilweise einen vorstehenden Bereich enthalten, der die Verrastung mit bewirkt.

Verrastung bedeutet hier die dauerhafte und nur unter hohem Kraftaufwand wieder lösbare Verbindung von mindestens zwei Teilen durch deren Formen und Ausdehnung sowie deren elastische Materialeigenschaften. Zur genauen Positionierung der Rastschiene und des Rastkanals zueinander ist ein Positionierungsanschlag definiert im Rastkanal ausgestaltet. Der Positionsanschlag ist bevorzugt ein Bereich des Stützkörpers und / oder des Federschenkels und besonders bevorzugt eine Aufkantung am Stützkörper und / oder am Federschenkel. Der Positionierungsanschlag des Rastkanals und der vorstehende Bereich der Rastschiene können beliebig im Rastkanal orientiert sein.

Der Positionierungsanschlag ist bevorzugt an der zur Scheibe orientierten Seite des Rastkanals am Stützkörper angebracht und der vorstehende Bereich der Rastschiene ist bevorzugt zur Scheibe hin ausgerichtet. Der Positionierungsanschlag kann aber auch an der von der Scheibe abgewandten Seite des Rastkanals am Federschenkel angebracht sein und der vorstehende Bereich der Rastschiene von der Scheibe weg ausgerichtet sein. Vorteilhaft ist es auch, dass die Rastschiene auslenkbar mit der Abdeckung verbunden ist. Auslenkbar bedeutet hierbei, dass sich die Rastschiene an der Verbindungsstelle zur Abdeckung beispielsweise im Rastvorgang verbiegen lässt, ohne von der Halteschiene abzubrechen oder sich dauerhaft zu verformen.

Die Rastschiene enthält bevorzugt Polypropylen, Polyvinylchlorid, Acrylnitril-Butadien-Styrol, Copolymere und / oder Gemische. Die Rastschiene weist zur Einstellung der Auslenkeigenschaften bevorzugt eine Profilstärke von 0,2 mm bis 1 mm an der Verbindung zur Abdeckung auf.

Vorteilhaft ist auch, dass der Positionierungsanschlag im Rastkanal abgerundet ist. Der Positionierungsanschlag ist bevorzugt derart abgerundet, dass er zusammen mit dem vorstehenden Bereich der Rastschiene ein Drehgelenk bildet. Durch die gelenkartige Annordung des Positionierungsanschlags und der Rastschiene kann die Rastschiene auch unter schrägen Winkeln in den Rastkanal eingebracht und unter Beibehaltung der vorbestimmten Position verrastet werden.

In einer anderen bevorzugten Ausgestaltung der Erfindung ist der vorstehende Bereich der Rastschiene segmentweise nicht ausgebildet. Die Segmente mit nicht ausgebildetem vorstehendem Bereich können eine Länge von 2 mm bis zu 50 mm, bevorzugt von 15 mm bis 30 mm haben. Bei der Montage der Abdeckung biegt der vorstehende Bereich der Rastschiene einen Federschenkel der Haltschiene auf. Mit der oben genannten Segmentierung wird bei dem Montagevorgang erreicht, dass immer ein Segment mit vorstehendem Bereich bereits verrastet ist bevor das nächste Segment mit vorstehendem Bereich beginnt den Federschenkel aufzubiegen. Die Verrastung eines Segments mit vorstehendem Bereich erfolgt jeweils mit einem akustischen Knacken, das eine wirksame Kontrolle für einen erfolgten Rastvorgang darstellt.

In einer anderen bevorzugten Ausgestaltung der Erfindung sind Teilabschnitte der Rastschiene ausgespart. Die Aussparungen können schlitzartig mit einer Breite von 0,1 mm bis 2 mm ausgeführt sein. Die Aussparungen und die Segmente der Rastschiene können aber auch eine Länge von 2 mm bis zu 50 mm haben. Ein Vorteil einer segmentierten Rastschiene liegt in der verbesserten Biegsamkeit der Rastschiene während des Montagevorgangs.

Weitere Merkmale, Einzelheiten und Vorteile der Erfindung ergeben sich aus dem Wortlaut der Unteransprüche sowie aus der folgenden Beschreibung von Ausführungsbeispielen anhand der Zeichnungen.

Es zeigen:
Fig. 1 eine Ansicht eines Querschnitts einer Abdichtungsanordnung für Fahrzeugscheiben gemäß dem Stand der Technik,
Fig. 2 eine Ansicht eines Querschnitts einer Abdichtungsanordnung für Fahrzeugscheiben gemäß der Erfindung, dargestellt in Fig. 7,
Fig. 3 eine Ansicht eines Querschnitts einer Abdichtungsanordnung für Fahrzeugscheiben gemäß der Erfindung, dargestellt in Fig. 7,
Fig. 4 eine Ansicht eines Querschnitts einer Abdichtungsanordnung für Fahrzeugscheiben gemäß der Erfindung,
Fig. 5 ein Ausführungsbeispiel eines Verfahrens zur Herstellung einer Abdichtungs-Anordnung für Fahrzeugscheiben im Flussdiagramm,
Fig. 6 räumliche Darstellungen von Ausgestaltungen der erfindungsgemäßen Abdeckung,
Fig. 7 eine Draufsicht auf eine Abdichtungsanordnung für eine Kraftfahrzeug-Windschutzscheibe gemäß der Erfindung und
Fig. 8 eine räumliche Darstellung einer Abdichtungsanordnung für Fahrzeugscheiben gemäß der Erfindung, dargestellt in Fig. 7.

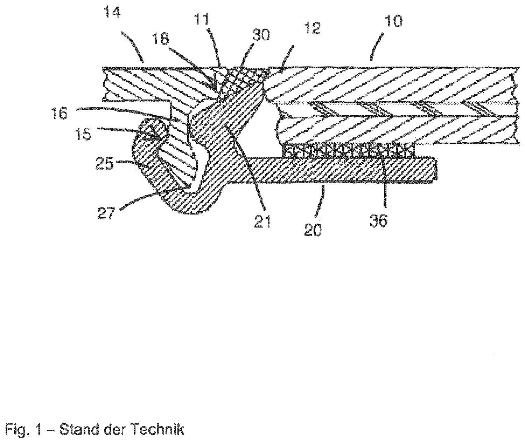

Fig.1 zeigt ein Vergleichsbeispiel einer Abdichtungs-Anordnung für Fahrzeugscheiben nach dem Stand der Technik. Eine Kraftfahrzeug-Windschutzscheibe (10) wurde am unteren Rand (12) mit einer Dichtung (30) in kraft- und formschlüssigen Kontakt gebracht. Die Dichtung (30) wurde aus einem Vollmaterial ausgebildet, dessen Unterseite am Anlagebereich der Oberkante (18) einer Wasserkasten-Abdeckung (14) dicht anlag. In Figur 1 ist erkennbar, dass die Außenfläche der Scheibe (10) mit dem Außenbereich der Dichtung (30) und der Außenfläche der Wasserkasten-Abdeckung (14) im Wesentlichen bündig abschloß und fluchtete. Die Halteschiene (20) enthielt im mittleren Bereich einen Stützkörper (21). An der Rückseite der Scheibe (10) war die Halteschiene (20) mit einer Kleberaupe (36) befestigt, die ihrerseits innen an der Karosserie flächig anlag. Unter Formschluss war am Positionierungsanschlag (15) eine Rastschiene (16) in einem Rastkanal (27) verrastet und damit mit der Abdeckung (14), Halteschiene (20) und Scheibe (10) verbunden. Aufgrund des kraft- und formschlüssigem Kontakts der Dichtung (30) mit der Abdeckung (14) und der Scheibe (10) sowie dem formschlüssigen Verrasten in einem Rastkanal (27) waren hohe Anforderungen an die Fertigungstoleranzen sowie Montage notwendig, um eine abdichtende und dauerhaft verbundene Abdichtungsanordnung für Fahrzeugscheiben zu erzielen.

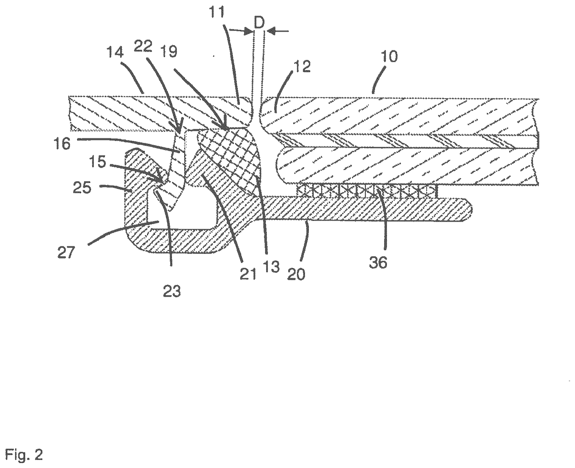

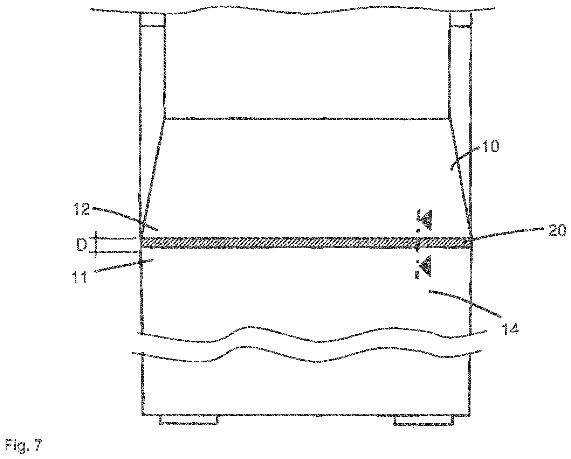

Fig. 2 zeigt eine erfindungsgemäße Abdichtungs-Anordnung für Fahrzeugscheiben im Querschnitt, dargestellt in Fig. 7. Eine Kraftfahrzeug-Windschutzscheibe (10) war am unteren Rand (12) über eine Halteschiene (20) mit einer Wasserkasten-Abdeckung (14) verbunden. Die Wasserkasten-Abdeckung (14) enthielt eine Rastschiene (16) mit einem von der Scheibe (10) weg ausgerichteten vorstehenden Bereich (23) der Rastschiene (16) und eine auf der Innenseite der Wasserkasten-Abdeckung (14) liegende Anlagefläche (19). Die zum Rand des unteren Bereichs (12) der Windschutzscheibe (10) ausgerichtete Hinterkante (11) der Wasserkasten-Abdeckung (14) war gerundet. Die Kante im unteren Bereich (12) der Windschutzscheibe (10) und die Hinterkante (11) der Wasserkasten-Abdeckung (14) wurden mit einem mittleren Abstand (D) von 0,3 mm und in der Flucht der Oberflächen bündig angeordnet. Zwischen der Hinterkante (11) der Abdeckung (14) und der Kante am unteren Rand (12) der Windschutzscheibe (10) befand sich ein freier Spalt ohne Dichtmaterial. Die Profilstärke im Verbindungsbereich (22) zwischen Rastschiene (16) und Wasserkasten-Abdeckung (14) betrug 0,5 mm. Eine Halteschiene (20) bildete mit einem Federschenkel (25) und einem Stützkörper (21) einen Rastkanal (27). Die Halteschiene (20) enthielt beispielsweise Polypropylen. Die Halteschiene (20) war mittels einer 0,8 mm dicken Klebeverbindung (36) mit Polyacrylat mit der Innenseite der Unterkante (12) der Windschutzscheibe (10) verbunden. Der Stützkörper (21) war zur Unterkante (12) der Windschutzscheibe (10) ausgerichtet. Der Federschenkel (25) enthielt einen Positionierungsanschlag (15) für die Rastschiene (16) und bildete die der Scheibe (10) abgewandte Seite des Rastkanals (27). Der Rastkanal (27) war zur Abdeckung (14) hin geöffnet und mit der nach innen zeigenden Rastschiene (16) der Abdeckung (14) verrastet. Der Rastkanal (27) war 3 mm tief ausgeführt. Bei der Montage der Abdeckung (14) wurde das Federelement (13) zwischen Stützkörper (21) und Anlagefläche (19) der Abdeckung (14) komprimiert. Das komprimierte Federelement (13) drückte dauerhaft auf die Anlagefläche (19) der Abdeckung (14). Dadurch wurde der vorstehende Bereich (23) der Rastschiene (16) gegen den Positionierungsanschlag (15) gezogen. Durch die Zugbelastung des vorstehenden Bereichs (23) der Rastschiene (16) gegen den Positionierungsanschlag (15) wurde eine sichere Positionierung der Abdeckung (14) in der Halteschiene (20) erreicht. Die sichere Positionierung war gewährleistet, ohne dass der Federschenkel (25) den vorstehenden Bereich (23) der Rastschiene (16) formschlüssig umschließt. Das Federelement (13) bestand aus Ethylen-Propylen-Dien-Kautschuk. Durch den großen Federweg des Federelements (13) war es möglich, auch bei großen Toleranzen von Rastschiene (16) und Halteschiene (20) eine sichere Verrastung bei der Montage zu erreichen.

Der Positionierungsanschlag (15) war als Aufkantung am Federschenkel (25) ausgeführt. Der Rastkanal (27) wurde von der Rastschiene (16) nur zu etwa 50% in seiner Tiefe ausgefüllt. Der Positionierungsanschlag (15) hielt die Rastschiene (16) unter Druck des Federelements (13) und des Federschenkels (25) dauerhaft in einer definierten Verrastungs-Position des Rastkanals (27). Aufgrund der definierten Position der Rastschiene (16) in dem Rastkanal (27) war eine präzise Abdichtungs-Anordnung aus Wasserkasten-Abdeckung (14), Windschutzscheibe (10) und Halteschiene (20) hergestellt. Durch die abdichtende Wirkung des Federelementes (13) an der Anlagefläche (19) war eine ausreichende Wasserabdichtung zwischen Windschutzscheibe (10) und Wasserkastenabdeckung (14) hergestellt. Gegenüber dem Stand der Technik wurde trotz des Abstandes (D) zwischen Windschutzscheibe (10) und Wasserkasten-Abdeckung (14) eine Abdichtungs-Anordnung und genaue Positionierung der Windschutzscheibe (10) und der Wasserkasten-Abdeckung (14) erzielt. Die hohen Anforderungen an die Fertigungstoleranzen und Montage konnten wesentlich besser erfüllt werden.

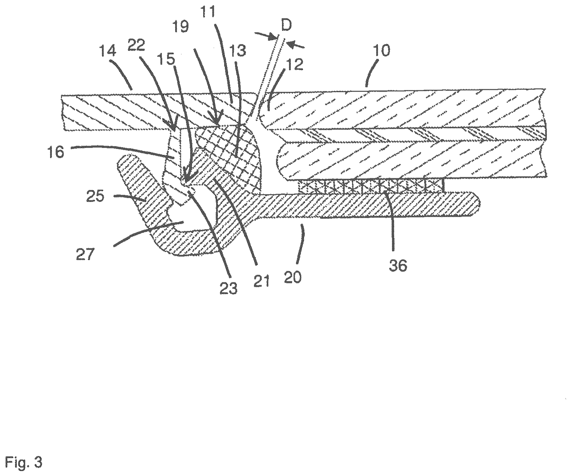

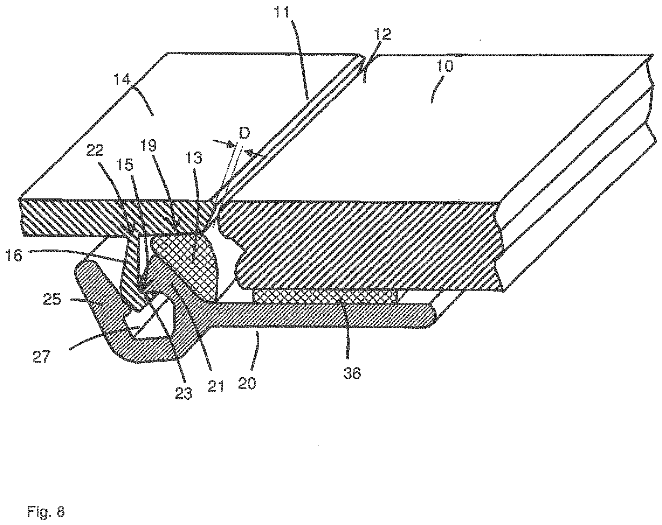

Figur 3 und Figur 8 zeigen eine alternative erfindungsgemäße Ausgestaltung der Abdichtungsanordnung. Gegenüber dem Ausführungsbeispiel der Figur 2 war der Positionierungsanschlag (15) auf der der Windschutzscheibe (10) zugewandten Seite des Rastkanals (27) angeordnet. Der vorstehende Bereich (23) der Rastschiene (16) war entsprechend in Richtung der Scheibe (10) ausgerichtet. Der Positionierungsanschlag (15) hielt die Rastschiene (16) unter Druck des Federelements (13) und des Federschenkels (25) dauerhaft in einer definierten Verrastungs-Position des Rastkanals (27). Der Positionierungsanschlag (15) war als Aufkantung am Stützkörper (21) ausgeführt. Der Positionierungsanschlag (15) und der vorstehende Bereich (23) der Rastschiene (16) waren verrundet ausgeführt, sodass unabhängig von der mehrdimensionalen Krümmung der Windschutzscheibe eine präzise Abdichtungs-Anordnung erzielt wurde. Die hohen Anforderungen an die Fertigungstoleranzen und Montage konnten wesentlich besser erfüllt werden.

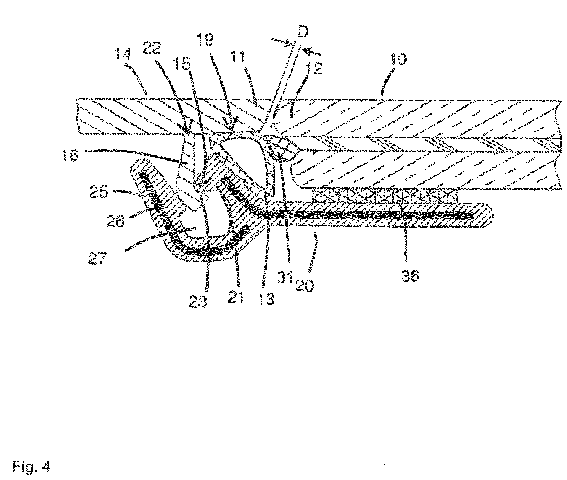

Figur 4 zeigt eine weitere alternative Ausgestaltung der Abdichtungsanordnung. Gegenüber den Ausführungsbeispielen der Figur 2 und Figur 3 war das Federelement (13) als Hohlkammerprofil mit einer Wandstärke von 0,1 mm bis 2 mm ausgestaltet. Der Federschenkel (25) und der Stützkörper (21) enthielten eine Versteifungs-Einlage (26) aus Aluminium. Zusätzlich hatte das Federelement (13) unterhalb der Abdeckung (14) eine Abdichtungserweiterung (31) mit Ethylen-Propylen-Dien-Kautschuk zum Glas. Im verrasteten Zustand drückte das Federelement die Abdichtung (31) unterhalb der Abdeckung (14) gegen das Glas. Zwischen der Hinterkante (11) der Abdeckung (14) und der Kante am unteren Rand (12) der Windschutzscheibe (10) befand sich weiterhin ein freier Spalt ohne Dichtmaterial. Durch die verbesserten Federeigenschaften und Steifigkeit der Halteschiene (20) konnte eine verbesserte Rastwirkung, Positionierung der Abdichtungsanordnung und Abdichtung der Anlagefläche (19) erzielt werden. Durch die zusätzliche Abdichtungserweiterung (31) konnte die Abdichtung der Abdichtungs-Anordnung ebenfalls weiter verbessert werden. Die hohen Anforderungen an die Fertigungstoleranzen und Montage konnten wesentlich besser erfüllt werden.

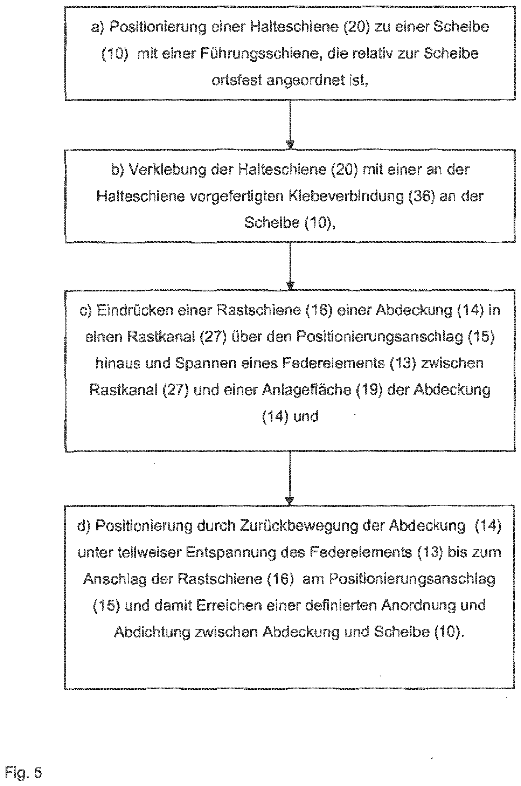

Figur 5 erklärt ausführlich die Verfahrensschritte zur Herstellung einer Abdichtungsanordnung von Fahrzeugscheiben.

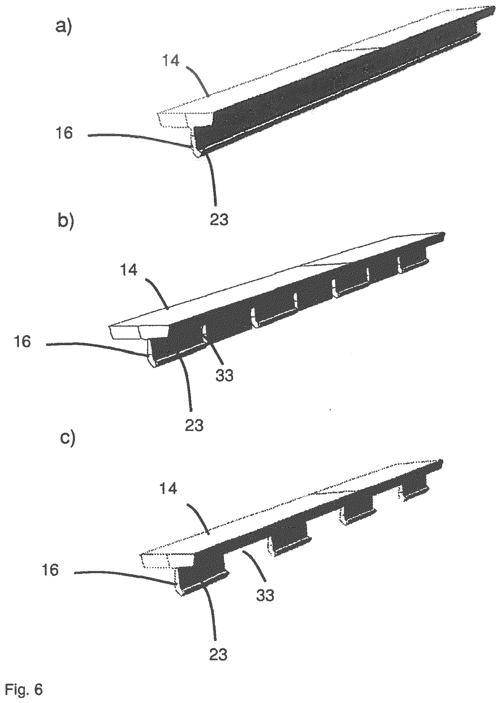

Figur 6 zeigt Ausgestaltungen der Abdeckung (14). Figur 6a zeigt die Abdeckung (14) mit einer durchlaufenden Rastschiene (16). Figur 6b zeigt eine vorteilhafte Abdeckung (14) mit Rastschienen (16), in die schlitzförmig Aussparungen (33) eingebracht wurden. Auch war hingegen jedes zweite resultierende Segment von der Rastschiene (16) ohne vorstehenden Bereich (23) und damit ohne Rastfunktion ausgeführt. In der Abdeckung (14) nach Figur 6c war jedes zweite Segment der Rastschiene (16) komplett ausgespart. Im Montagevorgang der Rastschiene (16) nach Figur 6a in den Rastkanal (27) wurde kaum akustisches Knacken vernommen. Im Gegensatz dazu wurde während der Verrastung mit der vorteilhaften Rastschiene (16) nach Figur 6b und der besonders vorteilhaften Rastschiene nach Figur 6c ein deutliches akustisches Knacken vernommen. Die Rastschienen (16) nach den Figuren 6a und 6b wiesen im Rastkanal (27) eine hohe Führungsstabilität auf senkrecht auf die Rastschiene wirkende Kräfte. Ein Biegen der Rastschiene (16) und ein Einrasten in Segmenten waren mit den Rastschienen (16) nach den Figuren 6b und 6c möglich. Somit wurde ein einfacheres Einrasten der Abdeckung (14) in die Halteschiene (20) im erfindungsgemäßen Verfahren ermöglicht.

Figur 7 zeigt eine Draufsicht auf eine erfindungsgemäße Ausgestaltung der Abdichtungsanordnung in einem Kraftfahrzeug. Der untere Rand (12) der Scheibe (10) war mit einem Abstand (D) von 0,3 mm über die Halteschiene (20) mit der Wasserkasten-Abdeckung (14) verbunden. Innerhalb der Fuge ist ein Teilbereich der Halteschiene (20) dargestellt.

### Bezugszeichenliste

- 10: Scheibe,
- 11: Hinterkante Abdeckung,
- 12: Unterer Rand der Scheibe,
- 13: Federelement,
- 14: Abdeckung,
- 15: Positionierungsanschlag,
- 16: Rastschiene,
- 18: Anlagebereich,
- 19: Anlagefläche,
- 20: Halteschiene,
- 21: Stützkörper,
- 22: Verbindung Rastschiene und Wasserkasten-Abdeckung,
- 23: Vorstehender Bereich,
- 25: Federschenkel,
- 26: Versteifungs-Einlage,
- 27: Rastkanal,
- 30: Dichtprofil,
- 31: Abdichtungserweiterung,
- 33: Aussparung,
- 36: Klebeverbindung,
- D: Abstand zwischen Hinterkante der Abdeckung und unterem Rand der Scheibe.

## Patentansprüche

1. Abdichtungs-Anordnung für Fahrzeugscheiben, enthaltend:
- eine Scheibe (10),
- eine Halteschiene (20), die mit der Scheibe (10) über eine Klebeverbindung verbunden ist, und
- eine Abdeckung (14) verbunden über eine Verbindungsstelle (22) mit einer Rastschiene (16),
wobei
- die Halteschiene (20) einen Rastkanal (27) enthält, der mit einem Federschenkel (25) und einem Stützkörper (21) gebildet wird,
- die Abdeckung (14) mit der Rastschiene (16) im Rastkanal (27) eingerastet ist und
- ein Federelement (13) zwischen einer Anlagefläche (19) der Abdeckung (14) und dem Stützkörper (21) angebracht ist,
**dadurch gekennzeichnet, dass**
- zwischen einer Hinterkante (11) der Abdeckung (14) und einer Kante am unteren-Rand (12) der Scheibe (10) sich ein freier Spalt befindet und
- der Abstand (D) zwischen dem Rand eines unteren Bereichs (12) der Scheibe (10) und der Hinterkante (11) der Abdeckung (14) 0,1 mm bis 2 mm beträgt.

2. Abdichtungs-Anordnung nach Anspruch 1, wobei das Federelement (13) mit dem Stützkörper (21) verbunden ist.

3. Abdichtungs-Anordnung nach Anspruch 1 oder 2, wobei das Federelement (13) als Vollmaterial oder als Hohlkammerprofil ausgeführt ist.

4. Abdichtungs-Anordnung nach einem der Ansprüche 1 bis 3, wobei das Federelement (13) Elastomere, thermoplastische Elastomere und bevorzugt Ethylen-Propylen-Dien-Kautschuk, Styrol-Butadien-Kautschuk, Polybutadien-Kautschuk, Nitrilkautschuk, Chloropren-Kautschuk, Fluorkautschuk, Silikonkautschuk, Polypropylen, Polyvinylchlorid, Acrylnitril-Butadien-Styrol, Copolymere und / oder Gemische davon enthält.

5. Abdichtungs-Anordnung nach einem der Ansprüche 1 bis 4, wobei die Verbindungsstelle (22) eine Dicke von 0,2 mm bis 1 mm aufweist.

6. Abdichtungs-Anordnung nach einem der Ansprüche 1 bis 5, wobei mindestens ein Positiönierungsanschlag (15) an der der Scheibe (10) abgewandten Seite des Rastkanals (27) angeordnet ist.

7. Abdichtungs-Anordnung nach Anspruch 1 bis 6, wobei mindestens ein Positionierungsanschlag (15) an der zur Scheibe (10) hin ausgerichteten Seite des Rastkanals (27) angeordnet ist.

8. Abdichtungs-Anordnung nach einem der Ansprüche 1 bis 7, wobei die Rastschiene (16) auslenkbar mit der Abdeckung (14) verbunden ist.

9. Abdichtungs-Anordnung nach einem der Ansprüche 1 bis 8, wobei der Positionierungsanschlag (15) abgerundet ist.

10. Abdichtungs-Anordnung nach einem der Ansprüche 1 bis 9, wobei die Rastschiene (16) in Durchlaufrichtung in Teilabschnitten Aussparungen (33) und/oder in Teilabschnitten keine vorstehenden Bereiche (23) aufweist.

11. Verwendung der Abdichtungs-Anordnung nach einem der Ansprüche 1 bis 10, im unteren Bereich (12) einer Kraftfahrzeug-Windschutzscheibe (10) und einen hinteren Bereich (11) einer Wasserkasten-Abdeckung (14).

## Claims

1. Sealing arrangement for motor vehicle panes, comprising:
- a pane (10),
- a mounting rail (20) that is connected to the pane (10) by an adhesive bond, and
- a cover (14) connected via a connection point (22) to a latching rail (16),
wherein
- the mounting rail (20) comprises a latching channel (27) that is formed by a contact tongue (25) and a support body (21),
- the cover (14) with the latching rail (16) is latched in the latching channel (27), and
- a spring element (13) is mounted between a contact surface (19) of the cover (14) and the support body (21),
**characterized in that**
- between a rear edge (1) of the cover (14) and an edge of the lower margin (12) of the pane (10) is a free gap and
- the distance (D) between the edge of a lower region (12) of the pane (10) and the rear edge (11) of the cover (14) is 0.1 mm to 2 mm.

2. Sealing arrangement according to claim 1, wherein the spring element (13) is connected to the support body (21).

3. Sealing arrangement according to claim 1 or 2, wherein the spring element (13) is implemented as a solid material or as a hollow chamber profile.

4. Sealing arrangement according to one of claims 1 through 3, wherein the spring element (13) contains elastomers, thermoplastic elastomers and, preferably, ethylenepropylene-diene rubber, styrene butadiene rubber, polybutadiene rubber, nitrile rubber, chloroprene rubber, fluororubber, silicone rubber, polypropylene, polyvinyl chloride, acrylonitrilebutadiene-styrene, copolymers, and / or mixtures thereof.

5. Sealing arrangement according to one of claims 1 through 4, wherein the connection point (22) has a thickness of 0.2 mm to 1 mm.

6. Sealing arrangement according to one of claims 1 through 5, wherein at least one positioning stop (15) is arranged on the side of the latching channel (27) facing away from the pane (10).

7. Sealing arrangement according to claim 1 through 6, wherein at least one positioning stop (15) is arranged on the side of the latching channel (27) facing the pane (10).

8. Sealing arrangement according to one of claims 1 through 7, wherein the latching rail (16) is deflectably connected to the cover (14).

9. Sealing arrangement according to one of claims 1 through 8, wherein the positioning stop (15) is rounded.

10. Sealing arrangement according to one of claims 1 through 9, wherein the latching rail (16) has, in the throughput direction, in subsections, recesses (33) and / or, in subsections, no protruding regions (23).

11. Use of the sealing arrangement according to one of claims 1 through 10, in the lower region (12) of a motor vehicle windshield (10) and a rear region (11) of a water box cover (14).

## Revendications

1. Ensemble d'étanchéité pour vitres de véhicule, contenant :
- une vitre (10),
- un rail de maintien (20), qui est relié à la vitre (10) par une liaison adhésive, et
- un élément de recouvrement (14) relié par l'intermédiaire d'une jonction (22) à un rail d'encliquetage (16),
dans lequel :
- le rail de maintien (20) contient un canal d'encliquetage (27), qui est formé par une branche de ressort (25) et un corps de support (21),
- l'élément de recouvrement (14) est encliqueté avec le rail d'encliquetage (16) dans le canal d'encliquetage (27), et
- un élément ressort (13) est monté entre une surface d'appui (19) de l'élément de recouvrement (14) et le corps de support (21),
**caractérisé par le fait que**
- entre un bord arrière (11) de l'élément de recouvrement (14) et un bord au bord inférieur (12) de la vitre (10) il y a un espace libre et
- la distance (D) entre le bord d'une région inférieure (12) de la vitre (10) et le bord arrière (11) de l'élément de recouvrement (14) est de 0,1 mm à 2 mm.

2. Ensemble d'étanchéité selon la revendication 1, dans lequel l'élément ressort (13) est relié au corps de support (21).

3. Ensemble d'étanchéité selon l'une des revendications 1 ou 2, dans lequel l'élément ressort (13) est réalisé sous forme de matière pleine ou sous forme de profilè à chambre creuse.

4. Ensemble d'étanchéité selon l'une des revendications 1 à 3, dans lequel l'élément ressort (13) contient des élastomères, des élastomères thermoplastiques et, de préférence, du caoutchouc éthylène-propylène-diène, du caoutchouc styrène-butadiène, du caoutchouc polybutadiène, du caoutchouc nitrile, du caoutchouc chloroprène, du caoutchouc fluoré, du caoutchouc silicone, du polypropylène, du poly(chlorure de vinyle), de l'acrylonitrile-butadiène-styrène, des copolymères et/ou mélanges de ceux-ci.

5. Ensemble d'étanchéité selon l'une des revendications 1 à 4, dans lequel la jonction (22) présente une épaisseur de 0,2 mm à 1 mm.

6. Ensemble d'étanchéité selon l'une des revendications 1 à 5, dans lequel au moins une butée de positionnement (15) est disposée sur le côté du canal d'encliquetage (27) opposé à la vitre (10).

7. Ensemble d'étanchéité selon l'une des revendications 1 à 6, dans lequel au moins une butée de positionnement (15) est disposée sur le côté du canal d'encliquetage (27) orienté en direction de la vitre (10).

8. Ensemble d'étanchéité selon l'une des revendications 1 à 7, dans lequel le rail d'encliquetage (16) est relié a l'élément de recouvrement (14) d'une manière apte à être dévié.

9. Ensemble d'étanchéité selon l'une des revendications 1 à 8, dans lequel la butée de positionnement (15) est arrondie.

10. Ensemble d'étanchéité selon l'une des revendications 1 à 9, dans lequel le rail d'encliquetage (16), dans la direction de passage, présente des évidements (33) dans des sections et/ou ne présente pas de zones en saillie (23) dans des sections.

11. Utilisation de l'ensemble d'étanchéité selon l'une des revendications 1 à 10, dans la région inférieure (12) d'un pare-brise (10) de véhicule automobile et une région arrière (11) d'un élément de recouvrement (14) de réservoir d'eau.
